# NEW EUROPEAN PATENT SPECIFICATION

(11) **EP 0 653 248 B2**
(45) Date of publication and mention of the opposition decision: **24.07.2002**
(45) Mention of the grant of the patent: 31.03.1999
(21) Application number: 94202994.3
(22) Date of filing: 14.10.1994
(51) Int. Cl.: B05D 7/02, B05D 3/00, B05D 3/06

(54) **Method for fabricating coloured constructions, consisting of sections, and appliances for employing said method**
Verfahren zur Herstellung gefärbter Konstruktionen, bestehend aus Längsabschnitten und Vorrichtungen zur Anwendung des Verfahrens
Procédé de fabrication de constructions colorées formées de sections et appareils pour la mise en oeuvre du procédé

(30) Priority: 15.10.1993 BE 9301098
(43) Date of publication of application: 17.05.1995
(73) Proprietor: DECEUNINCK PLASTICS INDUSTRIES N.V., 8830 Hooglede-Gits (BE)
(72) Inventor: Huyghe, Wilfried, B-8800 Roeselare (BE)
(74) Representative: Leherte, Georges M.L.M., Dr.

(56) References cited:
- EP-A- 0 047 508
- EP-A- 0 083 139
- EP-A- 0 469 961
- EP-A- 0 487 323
- EP-A- 0 610 122
- BE-A- 828 212
- FR-A- 1 469 096
- JP-A- 55 157 661
- US-A- 529 335
- US-A- 4 031 048
- US-A- 4 686 261
- US-A- 4 995 935
- PLASTICS ENGINEERING, vol.42, no.12, December 1986, GREENWICH, CONN US pages 31 - 33 V.MIRGEL ET AL. 'PU coatings stand out for plastic auto parts'
- KUNSTSTOF EN RUBBER, vol.38, no.2, February 1985, ROTTERDAM NL pages 18 - 21 DR. P. SELIER 'de schilderbaarheid van PUR- integraalschuim'
- KUNSTSTOFFE, vol.78, no.10, October 1988, MUNCHEN DE pages 1005 - 1011, XP52627 W.HECK ET AL. 'Lackieren von Kunstoffen für die Karosserie-Aussenbaut'
- Matières Plastiques, Jean Bost, vol. I CHIMIE APPLICATION
- COLORER LE PVC, LES CAHIERS TECHNIQUES DU BATIMENT
- Kömmerling "Kunststoff-Fenster System"
- Kunstoffe im Bau, Neues vom Fenster
- LA COULOUR CONTRE LA CORROSION, LES CAHIERS TECHNIQUES DU BATIMENT
- DECEUNINCK PLASTICS INDUSTRIES, UBAtc

## Description

The invention relates to a method for fabricating a construction composed of sections, having a colour different from the colour of the base material. Such a construction is hereinafter called a coloured construction.

The invention more in particular relates to a method for fabricating such a construction, which comprises sections and accessories which, at least over part of their surface, are provided with a colourant, said sections and accessories according to the method of the invention being provided with said colourant after their production and prior to assembly of the construction.

The field of application of the invention is more particularly the fabrication of windows, doors, gates or other constructional elements which are composed of a plurality of sections and accessories made of plastic. The plastic used can be either a thermosetting plastic or a thermoplastic. The fabrication of constructional elements in most cases makes use of PVC.

Various methods are already known for arriving at a coloured construction composed of plastic sections.

A first known method consists in mass colouration of the base material for the various sections. The sections are thus produced directly in the desired colour. The desired construction is then assembled from sections which consist of plastic of the desired colour.

A drawback of this method is that the colour of the plastic sections, with the exception of the colour white, is not very weather-resistant. Constructional elements are obtainable, however, in various colours such as: brown, grey, beige, green, ... Owing to their poor weather resistance, constructional elements in these colours are of lower quality, however.

Another known method makes use of the coextrusion technique. Together with the plastic section, a thin layer of plastic - having the desired colour - is extruded onto one or more surfaces of that section, in such a way that the section has the desired coloured surfaces.

A drawback of this method is that, every time one wishes to fabricate a different section, or the same section in a different colour, the extrusion tools (which provide the coextrusion) on the extrusion machines have to be replaced or adjusted. Such assembly and dismantling is very time-consuming and reduces the production capacity. In order to reduce this waste of time as far as possible, a large number of identical coloured sections will therefore be fabricated successively in each case. Moreover, the fabrication of a particular construction simultaneously requires a plurality of sections of different shape. The heart of the matter is that the fabrication of the construction usually requires a plurality of section types, usually in the same colour, but that the manufacturer of the sections, for reasons of productivity, would much rather make several colours simultaneously of the same type of section. Assembly of the construction can only commence once all the different sections have been delivered. Because the sections of the same shape in each case are extruded successively, no flexible supply is possible for the next operation, i.e. the assembly of the construction. Moreover, building up a stock in various colours is an expensive matter.

The drawback of the low flexibility is aggravated further as the number of different sections and colours to be provided is increased.

Yet another known method consists in laminating the section with an industrially coloured film. This is therefore done after the production of the sections and before the construction is assembled. Here too, adapting the lamination installation for industrial films to a section having a different shape is a time-consuming affair which takes several hours. This reduces the production-capacity. With this method, consequently, as large a number of sections as possible of the same shape will likewise be laminated successively to minimize the time wasted. Delivery of the various sections required for the same construction consequently likewise takes place in a manner which is not very flexible. An additional drawback of this method is that of the relatively high probability of the film delaminating as the section ages.

The problem of the low flexibility in supplying coloured sections is solved by another known method. In this case, the sections are not coloured, but instead those surfaces of the finished construction which are to be given a different colour, are covered with a paint layer or coating.

Those surfaces of the construction which are not to be coloured are first masked. Then those surfaces which are to be coloured, are degreased to obtain good adhesion of the paint or coating. Then the paint or coating is applied manually, by means of a spray unit in two or three successive layers, to the construction, finally followed by air-drying of the coating or drying of the construction in a heated oven. Masking, degreasing and spraying of the construction are carried out manually.

The drawback of this method is that it is very laborious, highly labour-intensive and time-consuming. This method consequently results in low productivity and is very expensive. Owing to the wide variety of constructions and to their dimensions on the one hand, and to the difficulty of masking different parts of the construction on the other hand, automation of this method cannot be achieved in an efficient manner.

The object of the invention is to develop a method for arriving at a coloured construction which permits a flexible supply of sections, results in a high-quality construction and is suitable for automation, as a result of which production capacity can be increased.

This object is achieved by means of a method in which the plastic sections are successively deaned and degreased, provided with a coating as defined hereinafter, brought to a temperature appropriate for aftercuring of the coating, and finally welded to one another to form the coloured construction.

The general principles of the successive steps of such a method are disclosed in general terms in EP 0487323 relating to the precoating of polypropylene moldings. In a review given in Kunstoffe 78 (1988)10, page 1007-1010 of the parameters involved in selecting the coating systems for plastic body parts, liquid paints based on thermosetting resins crosslinked with a hardener are stated as most appropriate.

Against that background the present invention as defined in claim 1 provides a method for fabricating a coloured construction from sections and accessories in which the sections and accessories are provided with a coating of a liquid paint based on thermoplastic resin, which paint comprises a thermosetting polymer containing hydroxyl and/or carboxyl groups, a hardener for crosslinking the polymer and a thermoplastic polyamide resin powder, dispersed in the paint.

The product which ensures crosslinking, also known as the hardener, is composed of aromatic isocyanate. Alternatively, it may be aliphatic or cycloaliphatic, the use of the diisocyanates and triisocyanates being preferred. In this case, the linked polymer having a hydroxyl and/or carboxyl/isocyanate function is known as polyurethane.

Examples of polyamides are the polyamide PA-6.6., the polyamide PA-6.10. and the polyamide PA-6.12. Mixtures are possible. Usually this involves PA-11, PA-12, PA-6/12 and/or PA-12.12, on their own or as mixtures, in short, preferably, polyamides having from 10 to 13 carbon atoms per carbon amide group.

The powders are obtained by grinding or direct polymerization to give the desired granulometric size.

The ultimate appearance of the coating can either be a smooth structure or a grained structure and any gradations in between.

The constructions are thus fabricated using precoated sections. Operation according to the invention results in coated sections which can be processed in a qualitative manner to give a construction. It is a fact that the coating without, for example, the thermoplastic resin, does not permit a construction to be made in a qualitative manner, starting from coated sections. This is caused by the special properties of the coating, i.e. the adhesion, the scratch resistance, the hardness and the abrasion resistance, which is better than in the other known coatings. Until now it was considered impossible to assemble constructions in a qualitative manner, starting from coated sections, because during the various treatments and processing operations of the sections, up to the assembly of the coloured constructions, the chance of damaging the coating is extremely high.

The coating according to the invention has special properties with respect to its scratch resistance, its hardness and its abrasion resistance.

The use of such a coating considerably reduces the probability of damage, so that the treatment and processing of coated sections, even in an automated appliance, can result in constructions of good quality, without damage.

If sections having different shapes are to be successively provided with the coating, this requires very little adaptation of the spray unit. This method therefore permits flexible supply of sections.

Preferably, this method is automated, the coating being sprayed onto the section surfaces in an automated spray unit, while the sections are passed through said spray unit on an automatic conveying system.

As a result of continuous spraying, the visual appearance of the coloured surfaces is more uniform than is the case for manual treatment.

In an alternative method, the application of the coating is carried out in a plurality of successive steps, a pigment-containing base layer being applied in the first steps, followed by subsequent steps, in which a UV-resistant colourless paint, in which polyamide grains are dispersed, is applied wet-on-wet, i.e. without the pigment-containing layer having dried.

This system may, if required, be applied in a plurality of layers. This surface-coating system (also known as "bi-couche" = two-layer system) can be applied in a qualitatively good manner only if this is done continuously, as described hereinafter and in the appended claims.

When the method according to the invention is applied by means of an automated spray unit, the sections can be passed rapidly past the various spray heads, so that the application of the second layer "wet-on-wet" in the "bi-couche" system can be carried out without difficulties.

Both for the "mono-couche" (= single-layer) system and for the "bi-couche" system the change in colour can be effected in a very flexible manner. The starting base material for the coating, containing, for example, the polyamide grains, and the hardener are separately supplied continuously during spraying. These products are then mixed together in the spray unit. The mixture then immediately leaves the spray unit. The supply of products, mixing and spraying thus take place continuously, so that at each moment a minimum amount of mixture is present in the spray unit.

Once the starting base material has been mixed with the hardener, the curing process is impossible to stop, after all. Because said mixing takes place just prior to spraying, there is never too much coating being produced. When changing the colour it is sufficient, after deaning the spray unit (e.g. with solvent), to pass a starting base material of a different colour to the spray unit.

Cleaning and degreasing of the sections is preferably effected by these being
a) warm-rinsed and brushed with a solution of an oxidant or cleaning agent (for example an aqueous solution of sodium hypochlorite),
b) warm-rinsed,
c) dried,
d) subjected to UV irradiation,
e) treated with a non-chlorinated solvent which is suitable for the type of plastic in question.

This treatment too can readily be automated, for example by providing an automatic conveying means on which the sections are passed past the various appliances (for rinsing, brushing, drying, UV irradiation, ...).

The UV irradiation and the subsequent treatment with a non-chlorinated solvent can be repeated a number of times if required.

The sections often need not be fabricated completely in the same colour. When a coating is applied during the method according to the present invention, those parts of the sections which need not be covered with the coating, are shielded, so that they cannot be reached by the spray unit

Once the coating has been applied to the sections, they have to be aftercured. This is sometimes described as "baking" the coating. Said aftercuring preferably takes place within half an hour after spraying and at a temperature of at most 80°C. This is because it was found that, by not waiting for too long after applying the coating, the best results are obtained from an aesthetic point of view.

At temperatures higher than 80°C, the probability of the plastic sections being deformed becomes too high.

In order to minimize the probability of deformations, while nevertheless achieving a high-quality result, the aftercuring temperature is preferably chosen between 40°C and 80°C.

Aftercuring of the sections is best carried out in a vertical position of the sections. Long sections which are placed in a different position at the after-curing temperature run the risk of deforming under the influence of their own weight.

The sections are preferably suspended in a vertical postion. An additional advantage is that of the available space being utilized optimally.

After curing, the sections are preferably laminated with a protective film whose adhesive layer comprises a non-solvent-based rubber glue. This is done to provide the coating on the sections with additional protection, in order to further minimize the probability of damage during the following manipulations and operations.

After curing the sections are allowed to rest for a limited time, for example 2 days, before they are used for assembling a construction.

Assembly of a construction is carried out by joining the various plastic sections to each other by welding. It may be necessary, however, first to saw the sections to size (for example sawing to a correct length or mitring).

As regards the welding techniques, these should be based (for PVC plastic sections) on a mirror temperature of approximately 260°C.

It is particularly important that the welding appliance used be equipped with a welding jig, so that the removal of the weld flashes (manually or automatically) can be performed in an aesthetic manner.

Removal of the weld flashes can be carried out according to various methods.

If the weld flashes are cut off, a stripe is visible having a width of from ± 0.5 to 1 mm. If they are milled off there is a groove of a width of ± 5 mm and a depth of approximately 0.5 mm.

The abovementioned stripe or groove is obviously no longer covered by the coating. The process of covering them again is called retouching. Retouching may also be necessary in the case of small defects.

For the purpose of retouching, use is made of a polyurethane paint, charged with, for example, polyamide grains, but containing a hardener which reacts at ambient temperature and makes the coating dry to handle in less than 10 minutes.

The application of the retouching coating is likewise effected by spraying. During retouching, the parts of the section around the stripe, groove or defect must be shielded. This can be done by means of a masking plate. This is a plate in which a cutout is provided having a shape which corresponds to the shape of the part to be retouched.

Such masking plates are provided for the most commonly occurring shapes of surfaces to be retouched.

Another possibility for retouching is to use jet delimiters on the spray unit.

Retouching can be done manually or can likewise be automated.

Retouching of relatively large surfaces or recoating of a construction is carried out according to the following procedure, for example at a temperature which is higher than 15°C,
a) cleaning, rinsing and spraying of the surfaces to be coated,
b) masking with film whose adhesive layer comprises a non-solvent-based rubber glue,
c) degreasing and cleaning with a solvent on a non-chlorinated basis,
d) spraying with polyurethane paint, charged with, for example, polyamide grains, but with a hardener which reacts at ambient temperature and makes the coating dry to handle after a limited timespan.

## Claims

1. Method for fabricating a coloured construction from sections and accessories which, at least over part of their surface, are provided with a colourant after their production and prior to assembly of the construction, wherein the sections and accessories are fabricated from plastic, and are successively
a) cleaned and degreased,
b) provided with a coating of a liquid paint based on thermosetting resin,
c) brought to a temperature appropriate for aftercuring of the coating,
d) joinded to one another to form the coloured construction,
**characterized in that** a paint comprising
- a thermosetting polymer containing hydroxyl and/or carboxyl groups, a hardener composed of aromatic, aliphatic or cycloaliphatic diisocyanate or triisocyanate for crosslinking the polymer; and
- a powder of thermoplastic polyamide dispersed in said paint
is applied on the sections and accessories before joining said sections and accessories by welding.

2. Method for the fabrication of a coloured construction according to claim 1, **characterized in that** the constructions are windows, doors or gates.

3. Method for the fabrication of a coloured construction according to any of the preceding claims, **characterized in that** the sections and accessories are fabricated from PVC, and are cleaned and degreased by being
a) warm-rinsed and brushed with an aqueous solution of an oxidant or cleaning agent such as a solution of sodium hypochlorite,
b) warm-rinsed,
c) dried,
d) subjected to UV irradiation,
e) treated with a non-chlorinated solvent which is suitable for said plastic.

4. Method for the fabrication of a coloured construction according to any of the preceding claims, **characterized in that** the application of the coating takes place in a plurality of successive steps, a pigment-containing base layer being applied in the first steps, followed by subsequent steps in which a UV-resistant coulourless paint, in which preferably polyamide particles are dispersed, is applied without the pigment-containing layer having dried.

5. Method for the fabrication of a coloured construction according to any of the preceding claims, **characterized in that** the aftercuring of the coating is carried out at a temperature of between 40°C and 80°C.

6. Method for the fabrication of a coloured construction according to any of the preceding claims, **characterised in that** a web of flexible material is extended by means of a reeling and unreeling appliance in the vicinity of a section, so as to shield the surfaces which are not to be coloured.

## Patentansprüche

1. Verfahren zur Herstellung eines farbbeschichteten Bauteils aus Bauelementen und Zubehörteilen, die wenigstens auf einem Teil ihrer Oberfläche nach ihrer Herstellung und vor dem Zusammenbau des Bauteils mit einer Farbbeschichtung versehen sind, wobei die Bauelementen und Zubehörteile aus Kunststoff hergestellt sind und nacheinander
a) gereinigt und entfettet
b) mit einer Beschichtung aus flüssigem Anstrichstoff, der auf duroplastischem Harz basiert,
c) auf eine für das Aushärten der Beschichtung geeignete Temperatur gebracht,
d) um das farbbeschichtete Bauteil zu bilden, miteinander verbunden werden.
**dadurch gekennzeichnet, dass** ein Anstrichstoff, der
- einen duroplastischen Polymer, der Hydroxyl und/oder Karboxylgruppen, einen aus aromatischen, aliphatischen oder zykloaliphatischen, Diisozyanaten oder Triisozynaten zusammengesetzten Härter zur Vernetzung des Polymers, und
- ein, im besagten Anstrichstoff dispergiertes thermoplastisches Polyamidepulver
enthält, auf die Bauelementen und die Zubehörteile aufgetragen wird, bevor des Vereinigen der besagte Bauelementen und Zubehörteile durch Schwei'en.

2. Verfahren zur Herstellung eines farbbeschichteten Bauteils nach Anspruch 1, **dadurch gekennzeichnet, dass** die Bauteile, Fenster, Türe oder Tore sind.

3. Verfahren zur Herstellung eines farbbeschichteten Bauteils nach irgendeinem der vorhergehenden Ansprüche, **dadurch gekennzeichnet, dass** die Bauelemente und Zubehörteile aus PVC hergestellt sind und gereinigt und entfettet werden indem sie
a) mit einer wässrigen Lösung eines Oxidationsmittels oder Reinigungsmittels (wie zum Beispiel einer Natriumhypochloritlösung) warm gespült und gebürstet,
b) warm gespült,
c) getrocknet,
d) einer UV-Bestrahlung unterzogen und,
e) mit einem unchlorierten Lösungsmittel, das für den betreffenden Kunststofftyp geeignet ist, behandelt werden.

4. Verfahren zur Herstellung eines farbbeschichteten Bauteils nach irgendeinem der vorhergehenden Ansprüche, **dadurch gekennzeichnet, dass** das Aufbringen der Beschichtung in mehreren aufeinanderfolgenden schritten geschieht, wobei in den ersten Schritten eine pigmenthaltige Grundschicht aufgetragen wird und danach in den folgenden Schritten ein UV-beständiger farbloser Anstrichstoff, in welchem vorzugsweise Polyamidkörner dispergiert sind, aufgetragen wird, ohne dass die pigmenthaltige Schicht zuvor getrocknet worden ist.

5. Verfahren zur Herstellung eines farbbeschichteten Bauteils nach irgendeinem der vorhergehenden Ansprüche, **dadurch gekennzeichnet, dass** das Aushärten der Beschichtung bei einer Temperatur zwischen 40°C und 80°C durchgeführt wird.

6. Verfahren zur Herstellung eines farbbeschichteten Bauteils nach irgendeinem der vorhergehenden Ansprüche, **dadurch gekennzeichnet, dass** ein Gewebe aus flexiblem Material mittels einer Abwikkel- und Aufwickelvorrichtung nahe dem Bauelement ausgestreckt wird um die Oberflächen, welche nicht farbbeschichtet werden müssen, abzudecken.

## Revendications

1. Méthode de fabrication d'une construction colorée à partir de sections et d'accessoires qui, sur au moins une partie de leur surface, sont munis d'un colorant après leur production et avant l'assemblage de la construction, où les sections et les accessoires sont fabriqués d'une matière synthétique, et sont
a) nettoyés et dégraissés,
b) pourvus d'un revêtement d'une peinture liquide à base de résine thermodurcissable,
c) amenés à une température appropriée pour le durcissement ultérieur du revêtement,
d) reliés l'un à l'autre pour former la construction colorée **caractérisée en ce qu**'une peinture comprenant
- un polymère thermodurcissable contenant des groupes hydroxyles et/ou carboxyles, un durcisseur composé d'un diisocyanate, ou d'un triisocyanate aromatique, aliphatique ou cycloaliphatique pour la réticulation du polymère, et
- une poudre de polyamide thermoplastique dispersée dans ladite peinture
est appliquée sur les sections et accessoires avant de joindre lesdites sections et accessoires par soudage.

2. Méthode de fabrication d'une construction colorée selon la revendication 1, **caractérisée en ce que** les constructions sont des fenêtres, des portes ou des barrières.

3. Méthode de fabrication d'une construction colorée selon l'une quelconque des revendications précédentes, **caractérisée en ce que** les sections et les accessoires sont fabriqués de PVC et **en ce qu'**ils sont nettoyés et dégraissés en étant
a) rincés à chaud et brossés avec une solution d'un agent oxydant ou un agent de nettoyage (tel qu'une solution aqueuse de hypochlorite de sodium),
b) rincés à chaud
c) séchés
d) soumis à une irradiation aux rayons UV
e) traités avec un solvant non chloré qui convient au type de matière synthétique en question.

4. Méthode de fabrication d'une construction colorée selon l'une quelconque des revendications précédentes, **caractérisée en ce que** l'application du revêtement s'effectue en plusieurs étapes successives, une couche de base contenant un pigment étant appliquée en une première étape, suivie d'étapes subséquentes dans lesquelles une peinture incolore résistant aux rayons UV, dans laquelle, de préférence des particules de polyamide sont dispersées, est appliqueée sans que la couche contenant le pigment soit sèche.

5. Méthode de fabrication d'une construction colorée selon l'une quelconque des revendications précédentes, **caractérisée en ce que** le durcissement ultérieur du revêtement s'effectue à une température se situant entre 40°C et 80°C.

6. Méthode de fabrication d'une construction colorée selon l'une quelconque des revendications précédentes, **caractérisée en ce qu**'un tissu de matière flexible est étendu au moyen d'un dispositif d'enroulement et de déroulement à proximité d'une section afin de masquer les surfaces qui ne doivent pas colorées.
